# EUROPEAN PATENT SPECIFICATION

(11) **EP 1 904 208 B1**
(45) Date of publication and mention of the grant of the patent: **03.06.2009**
(21) Application number: 06757844.3
(22) Date of filing: 19.07.2006
(51) Int. Cl.: B01D 29/23, B01D 35/147

(54) **FILTER DEVICE FOR FILTERING A HYDRAULIC FLUID**
FILTERVORRICHTUNG ZUM FILTRIEREN EINES HYDRAULIKFLUIDS
DISPOSITIF DE FILTRE POUR FILTRER UN FLUIDE HYDRAULIQUE

(30) Priority: 21.07.2005 EP 05106710
(43) Date of publication of application: 02.04.2008
(73) Proprietor: Yamashin Europe B.V., 3011 KD Rotterdam (NL)
(72) Inventor: GROENEWEGEN, Jorgen, Onno, NL-2518 KH Den Haag (NL); KIERDORF, Willem, Hubertus, NL-2729 LH Zoetermeer (NL); KITAJIMA, Noboyuki, NL-3068 TK Rotterdam (NL)
(74) Representative: van Westenbrugge, Andries
(86) International application number: PCT/NL2006/050182
(87) International publication number: WO 2007/011223

(56) References cited:
- WO-A-99/37907
- WO-A-20/05063358
- DE-A1- 10 113 179
- US-A- 3 996 137
- US-A- 5 772 868

## Description

The invention relates to a filter device for filtering a hydraulic fluid, comprising a filter z housing for receiving a filter element, which filter housing comprises an inlet, an outlet, a ring-shaped inside wall and end walls, one end wall comprises said inlet and/or outlet, and an over pressure reliever and a second outlet for relieving the pressure in the filter housing at an over pressure.

Such a filter device is known from patent WO 01/38744 A1. Said filter device is often used in hydraulic systems of for example shovels and excavators. In such machines the filter devices are used for the hydraulic systems of for example the breaks, power steering and specific hydraulic driven devices as load or dig devices. For such applications it is important that the static over pressure in the hydraulic system remains constant. If the over pressure is not constant a pressure which is to low can arise and therefore cavitation. This can cause dangerous situation because due to in the fluid arisen gas bubbles the hydraulic system will temporarily not function. Furthermore can cavitation, also due to the high pressures and temperatures which are developed by the imploding of said gas bubbles, cause substantial damage to the hydraulic system. A static over pressure which is too high can also cause damage to the hydraulic system. Especially the pump of the hydraulic system is sensitive toy pressures which are too high.

A disadvantage of the known device is that it can not produce the desired constant static over pressure, what results in all the above-mentioned disadvantages. An aim of the present invention is to provide in a filter device which can produce a (more) constant static over pressure. Said aim is reached with the filter device of the invention, by which the over pressure reliever is arranged in said other end wall, which end wall comprises the second outlet, and the over pressure reliever comprises a disc-shaped valve from which the outer circumference substantially corresponds with the internal diameter of the inside wall.

The known filter device does not react accurate enough to pressure changes. This results in that for the activation of the over pressure reliever, the over pressure in the filter device has to exceed a specific threshold value above the desired static over pressure. After said activation the over pressure reliever takes care that the over pressure in the filter device becomes equal to the desired static over pressure. Also in this activated situation does the over pressure reliever not respond accurate enough to pressure changes. This results to fluctuations in the by the known device produced static over pressure. Because of the specific form a position of the over pressure reliever of the filter device according the invention a large surface of the over pressure reliever is in fluid communication with the in the filter device received fluid, which is under pressure. Therefore the over pressure reliever reacts more accurately to pressure changes in said fluid. This way the threshold value above the desired static over pressure, by which the over pressure reliever is activated, will at least be strongly reduced or in the best case be eliminated. Also in the situation that the over pressure reliever is activated it will react more accurately to pressure changes. Because of that the device according the invention is capable to produce a (more) constant static over pressure. The constant static over pressure is preferably 0,5 bar.

Furthermore the device according the invention has the advantage that the fluid which is released by the over pressure reliever is clean filtered fluid. By the known filter device is the by the over pressure reliever released fluid not filtered. These filter devices are often used in hydraulic systems of for example shovels and excavators and operate therefore mostly in an environment which is characterized in that it contains a lot of fine dust. Because of this is it for said hydraulic systems very important that the hydraulic fluid is thoroughly filtered, through which the fluid remains in a good condition. Because of different reasons this is of importance for the user of these machines. The hydraulic system benefits of clean hydraulic fluid because it lengthens the life of the system. This also reduces the change of a breakdown. This is a big advantage for for example acceptors, because break-downs of the machines can lead to high costs when the acceptor can not finish the accepted work in time. Furthermore, the operational costs of the machines are reduced because they will use less hydraulic fluid. These cost savings go further then only the savings on the purchasing costs of the fluid, because according to environmental legislation said fluid has to be processed in an expensive way.

In one embodiment of the filter device according the invention the filter device comprise a second over pressure reliever for relieving the pressure in a received filter element at an over pressure. This has the advantage that when the received filter element gets constipated the pressure in the filter element can be released when the over pressure exceeds a specific value. Said specific value preferably equals an over pressure of 2,5 bar.

In one embodiment of the filter device according the invention the filter device comprises an under pressure reliever for relieving the pressure in a received filter element at an under pressure. When the pump in the hydraulic system, in which the filter element is incorporated, does not function, the circulation of fluid through the hydraulic system will be blocked. The under pressure reliever makes circulation of fluid in the hydraulic system possible. This way the steering of the wheels is not blocked in the case that the pump of the hydraulic system of a power steering does not function and as a result of that it is possible to position the wheels in a desired direction. The under pressure reliever opens preferably at an under pressure of 0,1 bar.

The under pressure reliever and the second over pressure reliever are in one embodiment of the filter device according the invention arranged in said other end wall. This way the filter device obtains a simple construction, because of which the filter device can be produced at a low price.

In one embodiment of the filter device according the invention the filter device comprises:
- a second over pressure reliever for relieving the pressure in a received filter element at an over pressure and/or
- an under pressure reliever for relieving the pressure in a received filter element at an under presser, wherein
- the under pressure reliever and/or the second over pressure reliever are arranged in said other end wall and
- the over pressure reliever comprises a fluid passage which is located substantially in the centre of the over pressure reliever.

Hereby a filter device with a compact and simple construction is realised. The fluid passage may be a reliever opening in a disc-shaped valve, which reliever opening is located substantially in the centre of the disc-shaped valve. The other end wall may comprise engagement means which in use engage with complementary engagement means of a filter element and fluid channels for the passage of fluid to the fluid passage. For a simple and effective construction the second over pressure reliever and/or under pressure reliever and fluid passage may be aligned along the centre line of the filter device.

In one embodiment according the invention a filter element is received in the filter housing, which filter element comprises an under surface, and the under pressure reliever and the second over pressure reliever are located in said under surface. Because the in the filter device received filter element is removable, is it possible to remove the filter element with the under pressure reliever and the second over pressure reliever from the filter housing for inspection. This way it is by any bad functioning of the filter device possible to evaluate whether the under pressure reliever and or the second over pressure reliever are the cause of said bad functioning, for example when one of the relievers is constipated. The under pressure reliever and the second over pressure reliever can be releasable connected with the under surface. When the filter element, the under pressure reliever or the second over pressure reliever do not function the right way, it is in that case not necessary to replace the whole combination of the filter element, the under pressure reliever and the second over pressure reliever. Only the not right functioning part of that combination has to be replaced. For removing the received filter element from the filter device the end wall of the filter housing of the filter device can comprise a lid, which lid provides excess to the inside of the filter device, ' and the filter element can comprise a cover for placing and removing the filter element.

In one embodiment of the filter device according to the invention a filter element is received in the filter housing, which filter element comprises an under surface, wherein the under pressure reliever and/or the second over pressure reliever are located in said under surface and the under pressure reliever and/or the second over pressure reliever are in fluid communication with the fluid passage of over pressure reliever. The filter element may comprises complementary engagement means which are located in said under surface and comprise fluid channels, wherein the complementary engagement means of the filter element are engaged with the engagement means of the filter device in such a way that the under pressure reliever and the second over pressure reliever are through the fluid channels in fluid communication with the fluid passage.

In one embodiment of the filter device according the invention a filter element is received in the filter housing, which filter element comprises an under surface and complementary engagement means, wherein the complementary engagement means and under pressure reliever and/or the second over pressure reliever are located in said under surface and wherein the complementary engagement means of the filter element are engaged with the engagement means of the filter device in such a way that the under pressure reliever and/or the second over pressure reliever are through the fluid channels of the filter device in fluid communication with the fluid passage of the over pressure reliever.

In one embodiment of the filter device according the invention the over pressure reliever closes in a closed position a fluid stream out the filter housing and opens in a open position a fluid stream out the filter housing, the second over pressure reliever closes in a closed position a fluid stream out the received or to be received filter element and opens in a open position a fluid stream out the filter element, and the under pressure reliever closes in a closed position a fluid stream in the filter element and opens in a open position a fluid stream in the filter element. In this embodiment of the device according the invention the fluid is for the filtering thereof transported from the inside of a received filter element through said filter element to the outside. It is with the fitter device according the invention also possible that the fluid for the filtering thereof is transported from the outside of the filter element to the inside thereof.

In one embodiment of the filter device according the invention a filter element is received in the filter housing, which filter element comprises a ring-shaped wall, wherein said other end wall comprises a second under pressure reliever for relieving an under pressure in the filter housing by supplying a fluid stream from the second outlet to the filter housing and between the ring-shaped wall of the filter element and the ring-shaped wall of the filter device. This embodiment has the advantage effect that cavitation due to an under pressure in the fluid down stream the filter element is eliminated. The second under pressure reliever may be located in the over pressure valve and may be constructed to close at an over pressure in the filter, housing and to open at an under pressure in the filter housing. The second under pressure reliever may be ring-shaped.

Furthermore the invention relates to a hydraulic system which comprises a filter device according the invention.

The invention will be described in detail with reference to the drawings in which:
Figure 1 shows a schematic cross section view of an embodiment of the filter device according the invention,
Figure 2a shows a schematic enlarged view of a part of the filter device of fig. 1 in the situation that the over pressure reliever is activated,
Figure 2b shows a schematic enlarged view of a part of the filter device of fig. 1 in the situation that the second over pressure reliever is activated,
Figure 2c shows a schematic enlarged view of a part of the filter device of fig. 1 in the situation that the under pressure allows fluid to flow in the filter element.
Figure 3 shows a schematic cross section view of the filter element of fig. 1,
Figure 4 shows a schematic process diagram of a hydraulic system with the filter device of fig. 1,
Figure 5a shows a schematic cross section view of another embodiment of the filter device according the invention,
Figure 5b shows a schematic enlarged view of a part of the filter device of fig. 5a in the situation that the over pressure reliever is activated,
Figure 5c shows a schematic enlarged view of a part of the filter device of fig. 5a in the situation that the second under pressure reliever is activated,
Figure 5d shows a schematic enlarged view of a part of the filter element the filter device of fig. 5a.
Figure 6a shows a schematic cross section view of the over pressure reliever of the filter device of fig. 5a, and
Figure 6b shows a schematic top view of the over pressure reliever of fig. 6a.

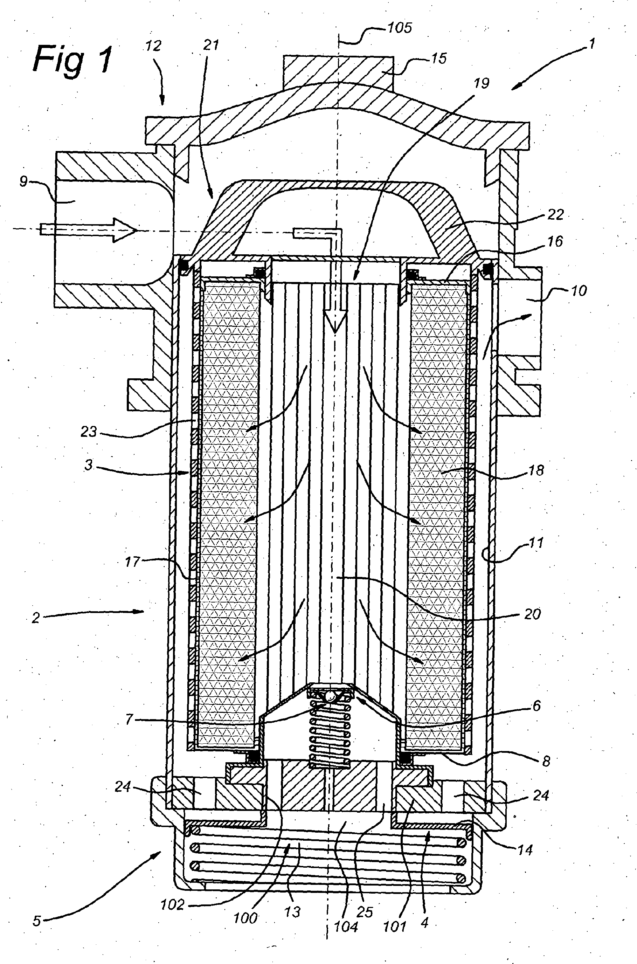

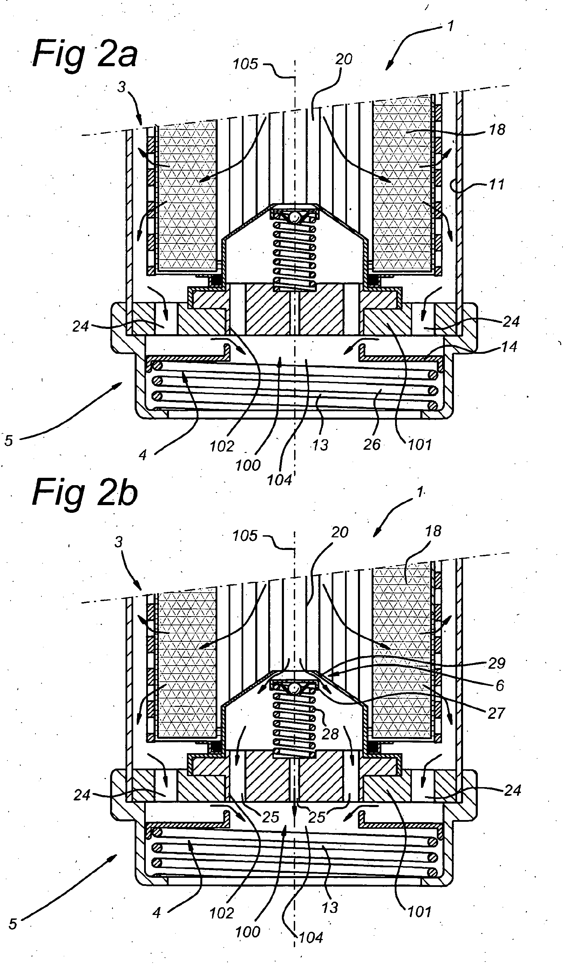

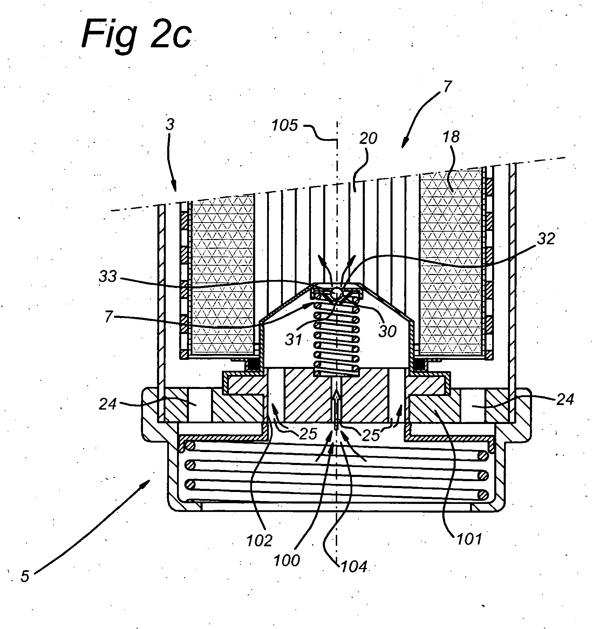

Figure 1 shows an embodiment of a filter device according the invention, wherein the filter device 1 comprises a filter housing 2 for receiving a filter element 3. The filter housing 2 comprises an inlet 9, outlet 10, end walls 5 and 12 and a ring-shaped inside wall 11. The inlet 9 and outlet 10 are arranged in the first end wall 12 and respectively serve for the supply and the removal of liquid. The inside of the filter housing 2 has a space in which a filter element 3 can be placed. The received filter element 3 comprises a ring-shaped wall 17, upper surface 16 and an under surface 8, which together define a space in which filter material 18 is arranged. The filter material 18 has the form of a layer which is placed against the ring-shaped wall 17. Because of this form the filter element 3 comprises in the centre of it an empty space 20 for receiving fluid which has to be filtered. This fluid is guided through the inlet 9 and via the opening 1 9 in the upper surface 16 of the filter element 3 in said space 20. Due to the pressure the fluid is transported through the filter material 18 in the space between the inside wall 11 of the filter housing 2 and the wall 17 of the filter element 3. This space is in fluid communication with the outlet 10 through which the filtered fluid is removed. The first end wall 12 further comprises a lid 15 which providers excess to the inside of the filter housing 2. For simplifying the placing and removing of the filter element 3, the filter element 3 comprises placing and removing cover 21 which extend along the wall 17 and the upper surface 16. The placing and removing cover 21 comprises second openings 23 extending along the wall 17 for the passage of the filtered fluid and a handle 22 which extends along the upper surface 16. The second end wall 5 comprises a second outlet 13 and in the second end wall 5 an over pressure reliever 4 is arranged. The over pressure reliever 4 is through first fluid channels 24 in fluid communication with the inside of the filter housing 2. The over pressure reliever 4 comprises a disc-shaped valve 14 from which the outer circumference substantially corresponds with the internal diameter of the inside wall 11 of the filter housing 2. The over pressure reliever comprises a fluid passage 100 in the form of a reliever opening which is located substantially in the centre of the over pressure reliever 4. The under surface 8 of the filter element 3 comprises a second over pressure reliever 6 and under pressure reliever 7, which second over pressure reliever 6 and under pressure reliever 7 are arranged in the second end wall 5 of the filter housing 2. The second over pressure reliever 6, under pressure reliever and fluid passage 100 are aligned along centre line 105. Said other end wall 5 comprises engagement means 101 which are connected with complementary engagement means 102 of the filter element 3. The second over pressure reliever 6 and under pressure reliever 7 are through second fluid channels 25 in fluid communication with the second outlet 13. The in this figure shown arrows show the flow of the hydraulic fluid in the situation that the over pressure reliever 4, second over pressure reliever 6 and under pressure reliever 7 are not activated and thus are blocking fluid steams. The functioning of the relievers 4, 6 and 7 is described in detail in the figures 2 a, b and c.

Figure 2a shows an enlarged view of a part of fig. 1 in the situation that the over pressure reliever 4 is activated. The arrows show the flow of the hydraulic fluid. The fluid is guided through the inlet (9 of fig. 1) in the empty space 20 of the filter element 3 in the way as described in the description of figure 1. Because the fluid is under pressure it is transported through the filter material 18. In the situation of fig. 2a the static over pressure would without the activation of the over pressure reliever 4, which comprises disc-shaped valve 14 and a spiral spring 26, be higher than the desired static over pressure. When the pressure in the filter device 1 tends to exceed the desired static over pressure, the disc-shaped valve 14, which is through the first fluid channels 24 in fluid communication with the in the filter housing 2 received fluid, will move gradually away of the second end wall 5. This way fluid will flow through the first fluid channels 24 and the fluid passage 100 of the disc-shaped valve 14 out of the second outlet 13. Because of that the pressure in the filter device I will reduce. Because the outer circumference of the disc-shaped valve 14 substantially corresponds with the internal diameter of the inside wall 11 of the filter device 1, a large surface area of the disc-shaped valve 14 is in fluid communication with the in the filter device 1 received fluid. Therefore the over pressure reliever 4 reacts very accurate to fluctuations in de pressure of the fluid. The over pressure reliever 4 has the characteristic that with a large increase of the over pressure the disc-shaped valve 14 will move further away from the second end wall 5 than with a small increase of the over pressure. Because of that a fluid stream out of the second outlet 13 is developed which relates to the degree of increase in the over pressure in the fluid in the filter device 1. When the over pressure in the filter device 1 reduces somewhat, the disc-shaped valve 14 will move correspondingly towards the second end wall 5. This way a constant static over pressure can be realised with the over pressure reliever 4. The over, pressure reliever 4 corrects continuously the fluctuations in the over pressure of the fluid and because of that there is inside the filter device 1 a constant static over pressure. The released fluid stream by the over pressure reliever 4 contains only filtered fluid.

Figure 2. b shows a enlarged view of a part of the filter device of fig. 1 in the situation that the second over pressure reliever is activated. The arrows show the flow of the hydraulic fluid. The liquid is guided through the inlet (9 of fig. 1) in the empty space 20 of the filter element 3 in the way as described in the description of figure 1. The situation of fig. 2B occurs when, for whatever reason, the pressure in the filter element 3 increases sharply. This can occur when the filter material 18 of the filter element 3 gets blocked. Because of this the fluid which has to be filtered has difficulties to (or sometimes even can not) move through the filter material 18. The pressure of the fluid in the empty space 20 of the filter device 1 will in that case increase strongly. When said pressure exceeds a specific value, named the maximal filter pressure, the second over pressure reliever 6 will open so that a fluid stream from the empty space 20 through the second outlet 13 can arise. The second over pressure reliever 6 comprises a second valve 27 which is pressed towards, and when the pressure is below the maximal filter pressure against, a closing element 29 by a second spiral spring 28. The space under the closing element 29 is through second fluid channels 25 in fluid communication with the second outlet 13. In the situation shown, the overpressure in the empty space 20 of the filter element 3 exceeds the maximal filter pressure and because of that the second valve 27 is pushed away from the closing element 29 so that a fluid stream arises which flows past the second over pressure reliever 6 through the second fluid channels 25 and the fluid passage 100 out of the second outlet 13. This way damage of the filter device 1 and the hydraulic system in which it is incorporated is prevented. Because of the high pressures in the filter device 1 the over pressure reliever 4 will also open when a decreased flow of fluid through the filter material occurs, as is shown in the figure.

Figure 2c shows an enlarged view of a part of the filter device of fig. 1 in the situation that the under pressure allows fluid to flow in the filter element.

The arrows show the flow of the hydraulic fluid. The situation of fig. 2c occurs when for example the pump of the hydraulic system in which the filter device 1 is incorporated does not function. The circulation of fluid in the hydraulic system is than blocked. When in this situation the hydraulic system is part of a steering powersystem of a vehicle, the wheels of the vehicle will be blocked in a specific direction. To be able to place the wheels in an other direction, a flow of fluid back in the system is necessary. The under pressure reliever 7 provides said back flow. In the back flow the fluid flows in the second outlet 13, through the fluid passage 100 and the second fluid channels 25 via the under pressure reliever 7 in the filter element 3. The under pressure reliever 7 comprises a housing 30 with a third and fourth opening 31 and 32 and a spherical closure 33 which is located in the housing 30. The third opening 31 is formed so that it can be closed by the spherical closure 33. With an over pressure in the with fluid filled space 20 of the filter element 3 the fluid tends to flow through the third opening 31 via the fourth opening 32. Because of that the spherical closure 33 will close the third opening 31. With an under pressure in the with fluid filled space 20 of the filter element 3, the fluid will tend to flow through the fourth opening 32 via the third opening 31.. The form of the second opening 32 is formed so that the spherical closure 33 is not capable to close it. This way a flow of fluid back in the filter element 3 is realised.

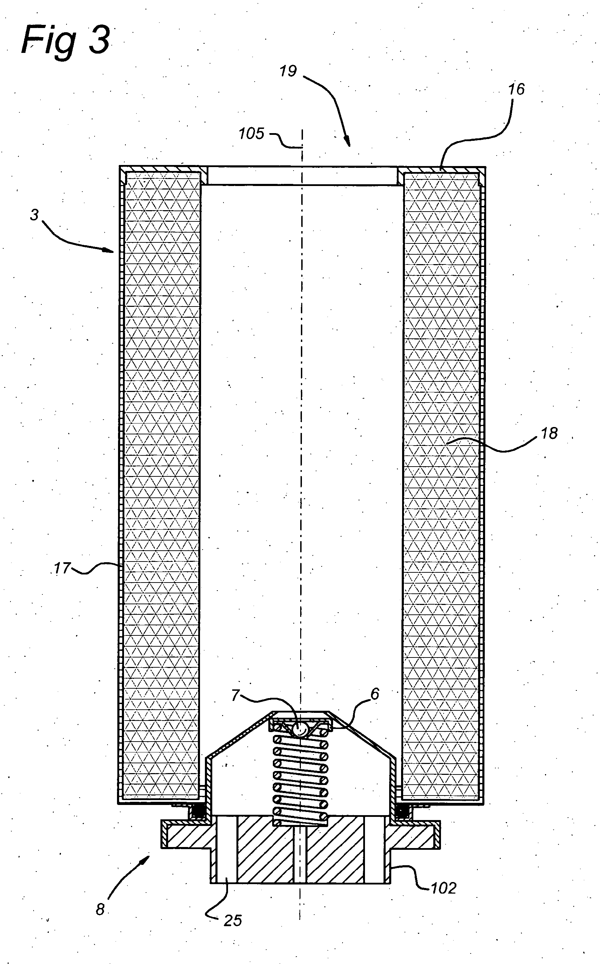

Figure 3 shows a schematic cross section view of the filter element of fig. 1. The filter element 3 comprises a ring-shaped wall 17, an upper surface 16 and an under surface 8, which together define a space in which filter material 18 is arranged. The filter material 18 has the form of a layer which is located on the ring-shaped wall 17. The upper surface 16 comprises an opening 19 and in the under surface 8 a second over pressure reliever 6 and an under pressure reliever 7 are arranged for respectively relieving of over pressure and under pressure in the filter element 3. The second over pressure reliever 6 and under pressure reliever 7 are releasable connected with the under surface 8. The filter element 3 comprises complementary engagement means 102 with second fluid channels 5. The complementary engagement means 102 are located in the under surface 8 of the filter element 3.

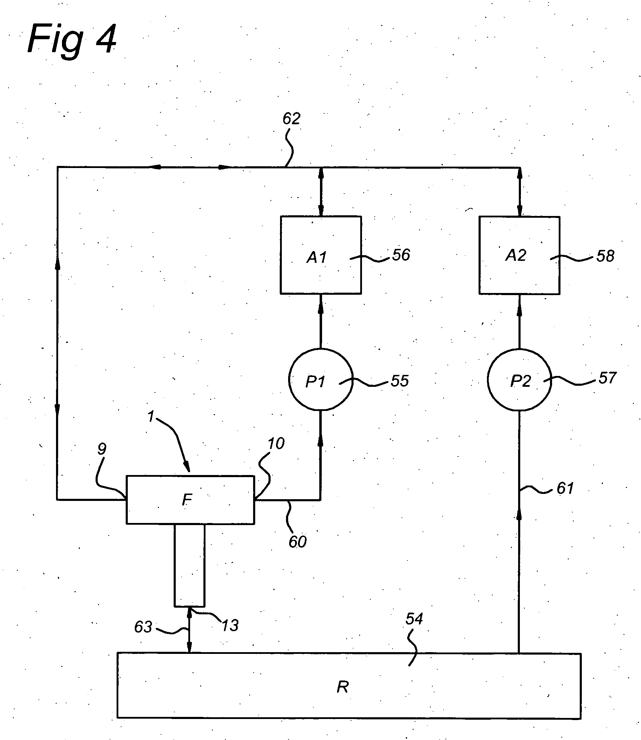

Figure 4 shows a schematic process diagram of a hydraulic system with the filter device of fig. 1. The hydraulic system comprises a filter device 1, a fluid reservoir 54, a first and second pump 55 and 57 and first and second hydraulic driven devices 56 and 58. The filter device 1 comprises an inlet 9, outlet 10 and a second outlet 13. The filter device 1 is with the outlet 10 by a first fluid connection 60 connected with the first pump 55 and the first hydraulic device, whereby the first pump 55 is located up streams of the first hydraulic device 56. The second pump 57 and the second hydraulic device 58 are with a second fluid connection 61 connected with the fluid reservoir 54. The second pump 57 is located up streams of the second hydraulic device 58. The hydraulic driven devices 56 and 58 are with a third fluid connection 62 connected with the inlet 9 of the filter device 1. The second outlet 13 of the filter device 1 is with a fourth fluid connection 63 connected with the fluid reservoir 54. The in the fluid connections 60, 61, 62 and 63 shown arrows show the possible flow direction of the hydraulic fluid. The hydraulic system has two circuits which both are connected to the filter device 1. One circuit contains the first pump 55 and the first hydraulic device 56 and the other circuit contains the second pump 57 and the second hydraulic device 58. This way the fluid of two circuits is, when the system is functioning the right way, cleaned by one filter device 1. The fluid stream in the second outlet 13 and out the inlet 9 of the filter device 1 only occur in the situation that the under pressure reliever (7 of fig. 2C) allows back flow of fluid in the filter device 1. The fluid stream out the second outlet 13 can occur in the situation that the over pressure reliever (4 of fig. 2A) and/or the second over pressure reliever (6 of fig. 2B) are activated. When the hydraulic system functions right, only the over pressure reliever will be activated as shown in fig. 2A. In said situation all the fluid which leaves the filter device 1 via the outlets 10 and 13 will be filtered. This way the hydraulic fluid remains in good condition, which has many advantages.

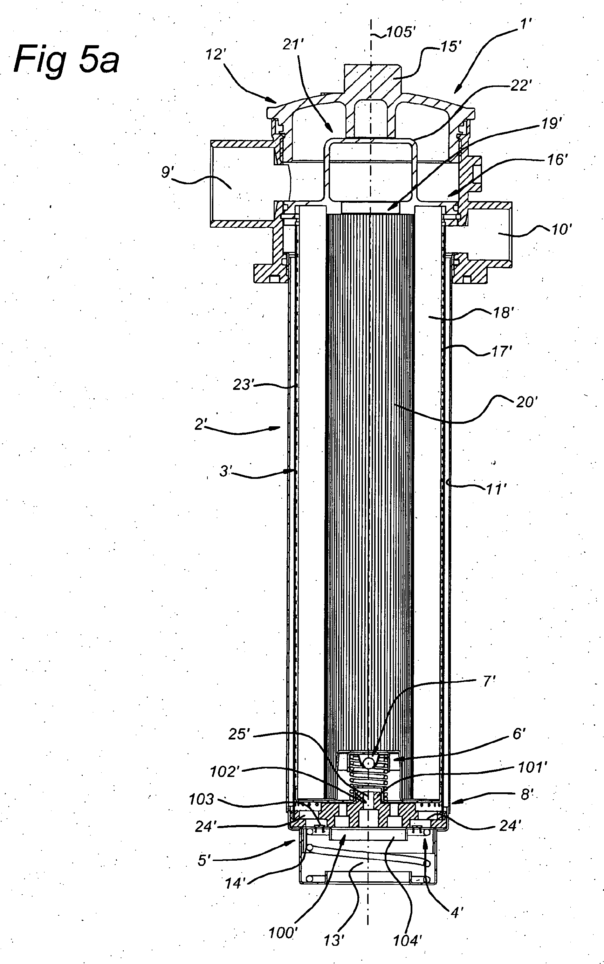

Figure 5a shows a schematic cross section view of an embodiment of the filter device according the invention. In the filter housing 2' of the filter device 1' is a filter element 3' is received. The filter element 3' comprises a ring-shaped wall 17'. Said other end wall 5' comprises a second under pressure reliever 103 for relieving an under pressure in the filter housing 2' by supplying a fluid stream from the second outlet 13' to the filter housing 2' and between the ring-shaped wall 17' of the filter element 3' and the ring-shaped wall 11' of the filter device 1'. The second under pressure reliever 103 is located in the over pressure valve 4' and is constructed to close at an over pressure in the filter housing 2' and to open at an under pressure in the filter housing 2'. The over pressure reliever 4' is disc-shaped and the second under pressure reliever 103 is ring-shaped.

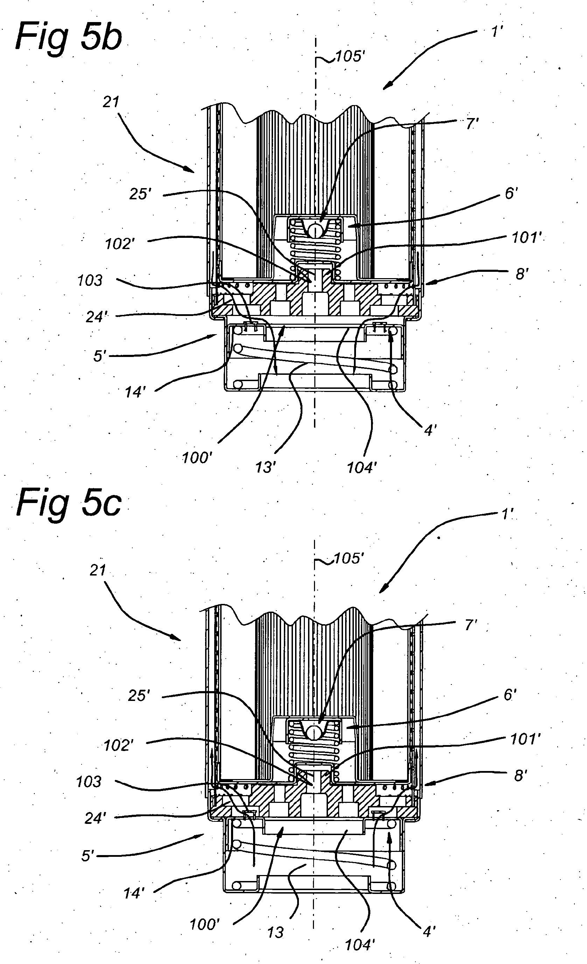

Figure 5b shows a schematic enlarged view of a part of the filter device of fig. 5a in the situation that there is an over pressure in filter housing 2' and the over pressure reliever 4' is activated. The shown arrows indicate the flow of the fluid. For relieving the over pressure in the filter housing 2', the fluid flows from the filter housing 2' through the first fluid channels 24' and fluid passage 100' out of the second outlet 13'. Because of the over pressure in the filter housing 2' the second under pressure reliever 103 is forced in a closed position. In this way an optimal effect of the over pressure reliever 4' is achieved.

Figure 5c shows a schematic enlarged view of a part of the filter device of fig. 5a in the situation that there is an under pressure in the filter housing and the second under pressure reliever is activated. The shown arrows indicate the flow of the fluid. For relieving the under pressure in the filter housing 2', the fluid flows from the second outlet 13' through the second under pressure reliever 103 and first fluid channels 24' in the filter housing 2'. Because of the under pressure in the filter housing 2' the second under pressure reliever 103 is forced in an ' open position to allow the fluid to flow in the filter housing 2'.

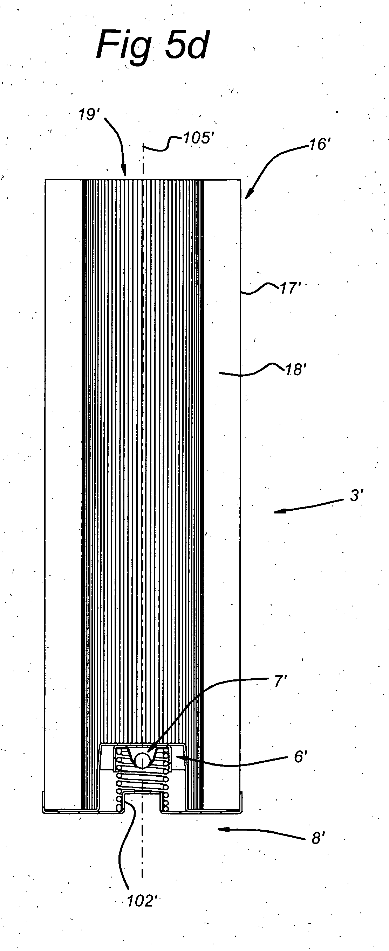

Figure 5d shows a schematic enlarged view of a part of the filter element the filter device of fig. 5a. The filter element 3' comprises a ring-shaped wall 17', complementary engagement means 102' and an upper surface 16 which comprises an opening 19', an under surface 8', a second over pressure reliever 6' for relieving the pressure in the filter element 3 at an over pressure and/or an under pressure reliever 7' for relieving the pressure in the filter element 3' at an under pressure. The wall 17', upper surface 16' and under surface 8' together define a space in which filter material 18' is arranged. The complementary engagement means 102', under pressure reliever 7' and/or the second over pressure reliever 6' and are located in said under surface 8'. The complementary engagement means 102' of the filter element 3' are arranged to be in use engaged with engagement means of the filter device in such a way that the under pressure reliever 7' and/or the second over pressure reliever 6' are through the fluid channels in fluid communication with the fluid passage of the over pressure reliever of the filter device.

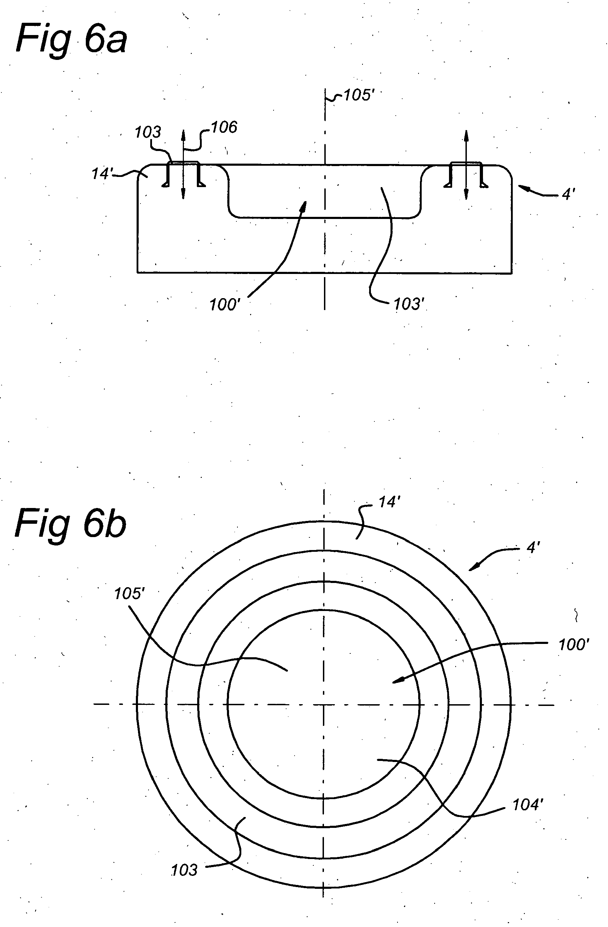

The figures 6 a and b show the over pressure reliever of the filter device of fig. 5a. The over pressure reliever 4'is a disc-shaped valve 14'. In the centre of the valve 14', which is indicated by the centre line 105', is a fluid passaged 100' in the form of a opening 103' located. The over pressure reliever 4' comprises a second under pressure valve 103 which is located in the top part of the reliever 4'. The second under pressure valve 103 is arranged in such a way that it is movable relative to the over pressure reliever 4' in the direction indicated by arrow 106. The second under pressure reliever 103 is ring-shaped.

It will be clear to the person skilled in the art that within the scope of the by the claim defined protection many variations of embodiments according the invention are possible.

## Claims

1. Filter device (1) for filtering a hydraulic fluid, comprising a filter housing (2) for receiving a filter element (3), which filter housing (2) comprises an inlet (9), an outlet (10), a ring-shaped inside wall (11) and end walls (5, 12), one end wall (12) comprises said inlet and/or outlet, and
an over pressure reliever (4) and a second outlet (13) for relieving the pressure in the filter housing (2) at an over pressure, **characterized in that**
the over pressure reliever (4) is arranged in the other end wall (5), which end wall (5) comprises the second outlet (13), and
the over pressure reliever (4) comprises a disc-shaped valve (14) from which the outer circumference substantially corresponds with the internal diameter of the inside wall (11).

2. Filter device according claim 1, **characterized in that** the filter device (1) comprises a second over pressure reliever (6) for relieving the pressure in a received filter element (3) at an over pressure.

3. Filter device according to one of the preceding claims, **characterized in that** the filter device (1) comprises an under pressure reliever (7) for relieving the pressure in a received filter element (3) at an under pressure.

4. Filter device according to one of the preceding claims, **characterized in that** the under pressure reliever (7) and the second over pressure reliever (6) are arranged in said other end wall (5).

5. filter device according to claim 1, **characterized in that** filter device (1) comprises
- a second over pressure reliever (6) for relieving the pressure in a received filter element (3) at an over pressure and/or
- an under pressure reliever (7) for relieving the pressure in a received filter element (3) at an under presser, wherein
- the under pressure reliever (7) and/or the second over pressure reliever (6) are arranged in said other end wall (5) and
- the over pressure reliever (4) comprises a fluid passage (100) which is located substantially in the centre of the over pressure reliever (4).

6. Filter device according to claim 5, **characterized in that** the fluid passage (100) is a reliever opening (104) in a disc-shaped valve (14), which reliever opening (104) is located substantially in the centre of the disc-shaped valve (14).

7. Filter device according to one of the claims 5 and 6, **characterized in that** said other end wall (5) comprises engagement means (101) which in use engage with complementary engagement means of a filter element (3) and fluid channels (25) for the passage of fluid to the fluid passage (100).

8. Filter device according to claim 2 or 3, **characterized in that** in the filter housing (2) a filter element (3) is received, which filter element (3) comprises an under surface (8), and the under pressure reliever (7) and the second over pressure reliever (6) are located in said under surface (8).

9. Filter device according to claim 8, **characterized in that** the under pressure reliever (7) and the second over pressure reliever (6) are releasable connected with the under surface (8).

10. Filter device according to claims 5 or 6, **characterized in that**
- in the filter housing (2) a filter element (3) is received, which filter element (3) comprises an under surface (8),
- the under pressure reliever (7) and/or the second over pressure reliever (6) are located in said under surface (8) and
- the under pressure reliever (7) and/or the second over pressure reliever (6) are in fluid communication with the fluid passage (100) of over pressure reliever (4).

11. Fitter device according to claim 10, **characterized in that**
- the filter element (3) comprises complementary engagement means (102) which are located in said under surface (8) and comprises fluid channels (25),
- the complementary engagement means (102) of the filter element (3) are engaged with the engagement means (101) of the filter device (1) in such a way that the under pressure reliever (7) and the second over pressure reliever (6) are in fluid communication with the fluid passage (100) through the fluid channels (25).

12. Filter device according to claim 7, **characterized in that** - in the filter housing (2) a filter element (3) is received, which filter element (3) comprises an under surface (8) and complementary engagement means (102),
- the complementary engagement means (102) and under pressure reliever (7) and/or the second over pressure reliever (6) are located in said under surface (8) and
- the complementary engagement means (102) of the filter element (3) are engaged with the engagement means (101) of the filter device (1) in such a way that the under pressure reliever (7) and/or the second over pressure reliever (6) in fluid communication with the fluid passage (100) of the over pressure reliever (4) are through the fluid channels (25).

13. Filter device according to one of the preceding claims 3 - 12, **characterized in that** the over pressure reliever (4) in a closed position closes a fluid stream out the filter housing (2) and in a open position opens a fluid stream out the filter housing (2),
the second over pressure reliever (6) in a closed position closes a fluid stream out the received or to be received filter element (3) and in a open position opens a fluid stream out the filter element (3), and
the under pressure reliever (7) in a closed position closes a fluid stream in the filter element (3) and in a open position opens a fluid stream in the filter element (3).

14. Filter device according to one of the preceding claims, **characterized in**
- **that** in the filter housing (2) a filter element (3) is received, which filter element (3) comprises a ring-shaped wall (17),
- **that** said other end wall (5) comprises a second under pressure reliever (103) for relieving an under pressures in the filter housing (2) by supplying a fluid stream from the second outlet (13) to the filter housing (2) and between the ring-shaped wall (17) of the filter element (3) and the ring-shapcd wall (11) of the filter device (1).

15. Filter device according to claim 14, **characterized in that** the second under pressure reliever (103) is located in the over pressure valve (4) and is constructed to close at an over pressure in the filter housing (2) and to open at an under pressure in the filter housing (2).

16. Filter device according to claim 14, **characterized in that** the second under pressures reliever (103) is ring-shaped.

17. Hydraulic system which comprises a filter device (1) according to one of the claims 1-16.

## Patentansprüche

1. Filtervorrichtung (1) zum Filtern eines Hydraulikfluids, enthaltend ein Filtergehäuse (2) für die Aufnahme eines Filterelementes (3), wobei dieses Filtergehäuse (2) einen Einlass (9), einen Auslass (10), eine ringförmige Innenwand (11) und Stirnwände (5, 12) hat, von denen eine Stirnwand (12) den Einlass und/oder Auslass enthält, und
eine Überdruck-Ablasseinrichtung (4) sowie einen zweiten Auslass (13), um den Druck im Filtergehäuse (2) bei einem Überdruck abzulassen, **dadurch gekennzeichnet, dass**
die Überdruck-Ablasseinrichtung (4) in der anderen Stirnwand (5) angeordnet ist, wobei diese Stirnwand (5) den zweiten Auslass (13) enthält, und
die Überdruck-Ablasseinrichtung (4) ein scheibenförmiges Ventil (14) enthält, bei dem der Außenumfang im wesentlichen dem Innendurchmesser der Innenwand (11) entspricht.

2. Filtervorrichtung nach Anspruch 1, **dadurch gekennzeichnet, dass** die Filtervorrichtung (1) eine zweite Überdruck-Ablasseinrichtung (6) enthält, um den Druck in einem aufgenommenen Filterelement (3) bei einem Überdruck abzulassen.

3. Filtervorrichtung nach einem der vorhergehenden Ansprüche, **dadurch gekennzeichnet, dass** die Filtervorrichtung eine Unterdruck-Ablasseinrichtung (7) enthält, um den Druck in einem aufgenommenen Filterelement (3) bei einem Unterdruck abrulassen.

4. Filtervorrichtung nach einem der vorhergehenden Ansprüche, **dadurch gekennzeichnet, dass** die Unterdruck-Ablasseinrichtung (7) und die zweite Überdruck-Ablasseinrichtung (6) in der anderen Stirnwand (5) angeordnet sind.

5. Filtervorrichtung nach Anspruch 1, **dadurch gekennzeichnet, dass** die Filtervorrichtung (1) enthält:
- eine zweite Überdruck-Ablasseinrichtung (6), um den Druck in einem aufgenommenen Filterelement (3) bei einem Überdruck abrulassen, und/oder
- eine Unterdruck-Ablasseinrichtung (7), um den Druck in einem aufgenommenen Filterelement (3) bei einem Unterdruck abrulassen, wobei
- die Unterdruck-Ablasseinrichtung (7) und/oder die zweite Überdruck-Ablasseinrichtung (6) in der anderen Stirnwand (5) angeordnet sind und
- die Überdruck-Ablasseinrichtung (4) einen Fluiddurchgang (100) enthält, der im wesentlichen im Zentrum der Überdruck-Ablasseinrichtung (4) angeordnet ist.

6. Filtervorrichtung nach Anspruch 5, **dadurch gekennzeichnet, dass** der Fluiddurchgang (100) eine Ablasseinrichtungsöffnung (104) in einem scheibenförmigen Ventil (14) ist, wobei die Ablasseinrichtungsöffnung (104) im wesentlichen im Zentrum des scheibenförmigen Ventils (14) angeordnet ist.

7. Filtervorrichtung nach Anspruch 5 und 6, **dadurch gekennzeichnet, dass** die andere Stirnwand (5) Eingreifeinrichtungen (101), die bei Verwendung mit komplementären Eingreifeinrichtungen eines Filterelementes (3) in Eingriff gelangen, und Fluidkanäle (25) für den Durchgang von Fluid zum Fluiddurchgang (100) enthält.

8. Filtervorrichtung nach Anspruch 2 oder 3, **dadurch gekennzeichnet, dass** im Filtergehäuse (2) ein Filterelement (2) aufgenommen ist, wobei das Filterelement (3) eine Unterseite (8) enthält, und die Unterdruck-Ablasseinrichtung (7) sowie die zweite Überdruck-Ablasseinrichtung (6) in der Unterseite (8) angeordnet sind.

9. Filtervorrichtung nach Anspruch 8, **dadurch gekennzeichnet, dass** die Unterdruck-Ablasseinrichtung (7) und die zweite Überdruck-Ablasseinrichtung (6) lösbar mit der Unterseite (8) verbunden sind.

10. Filtervorrichtung nach Anspruch 5 oder 6, **dadurch gekennzeichnet, dass**
- im Filtergehäuse (2) ein Filterelement (3) aufgenommen ist, wobei dieses Filterelement eine Unterseite (8) enthält,
- die Unterdruck-Ablasseinrichtung (7) und/oder die zweite Überdruck-Ablasseinrichtung (6) in der Unterseite (8) angeordnet sind, und
- die Unterdruck-Ablasseinrichtung (7) und/oder die zweite Überdruck-Ablasseinrichtung (6) in Fluidverbindung mit dem Fluiddurchgang (100) der Überdruck-Ablasseinrichtung (4) stehen.

11. Filtervorrichtung nach Anspruch 10, **dadurch gekennzeichnet, dass**
- das Filterelement (3) komplementäre Eingreifeinrichtungen (102) enthält, die sich in der Unterseite (8) befinden und Fluidkanäle (25) enthalten,
- die komplementären Eingreifeinrichtungen (102) des Filterelementes (3) mit den Eingreifeinrichtungen (101) der Filtereinrichtung derart in Eingriff gelangen, dass die Unterdruck-Ablasseinrichtung (7) und die zweite Überdruck-Ablasseinrichtung (6) in Fluidverbindung mit dem Fluiddurchgang (100) durch die Fluidkanäle (25) stehen.

12. Filtervorrichtung nach Anspruch 7, **dadurch gekennzeichnet, dass**
- im Filtergehäuse (2) ein Filterelement (3) aufgenommen ist, wobei dieses Filterelement (3) eine Unterseite (8) und komplementäre Eingreifeinrichtungen (102) enthält,
- die komplementären Eingreifeinrichtungen (102) sowie die Unterdruck-Ablasseinrichtung (7) und/oder die zweite Überdruck-Ablesseinrichtung (6) in der Unterseite (8) angeordnet sind und
- die komplementären Eingreifeinrichtungen (102) des Filterelementes (3) mit den Eingreifeinrichtungen (101) der Filtervorrichtung (1) derart in Eingriff stehen, dass die Unterdruck-Ablasseinrichtung (7) und/oder die zweite Überdruck-Ablasseinrichtung (6) durch die Fluidkanäle (25) in Fluidverbindung mit dem Fluiddurchgang (100) der Überdruck-Ablasseinrichtung (4) stehen.

13. Filtervorrichtung nach einem der vorhergehenden Ansprüche 3 bis 12, **dadurch gekennzeichnet, dass**
die Überdruck-Ablasseinrichtung (4) in einer geschlossenen Stellung einen Fluidstrom aus dem Filtergehäuse (2) schließt und in einer geöffneten Stellung einen Fluidstrom aus dem Filtergehäuse (2) öffnet,
die zweite Überdruck-Ablasseinrichtung (6) in einer geschlossenen Stellung einen Fluidstrom aus dem aufgenommenen oder dem aufzunehmendem Filterelement (3) schließt und in einer geöffneten Stellung einen Fluidstrom aus dem Filterelement (3) öffnet und
die Unterdruck-Ablasseinrichtung (7) in einer geschlossenen Stellung einen Fluidstrom im Filterelement (3) schließt und in einer geöffneten Stellung einen Fluidstrom im Filterelement (3) öffnet.

14. Filtervorrichtung nach einem der vorhergehenden Ansprüche, **dadurch gekennzeichnet, dass**
- im Filtergehäuse (2) ein Filterelement (3) aufgenommen ist, wobei dieses Filterelement eine ringförmige Wand (17) enthält, und
- die andere Stirnwand (5) eine zweite Unterdruck-Ablasseinrichtung (103) enthält, um einen Unterdruck im Filtergehäuse (2) abrulassen, indem sie einen Fluidstrom vom zweiten Auslass (13) in das Filtergehäuse (2) und zwischen die ringförmige Wand (17) des Filterelementes (3) und die ringförmige Wand (11) der Filtervorrichtung (1) einleitet.

15. Filtervorrichtung nach Anspruch 14, **dadurch gekennzeichnet, dass** die zweite Unterdruck-Ablasseinrichtung (103) im Überdruckventil (4) angeordnet und so beschaffen ist, dass sie sich bei einem Überdruck im Filtergehäuse (2) schließt und bei einem Unterdruck im Filtergehäuse (2) öffnet.

16. Filtervorrichtung nach Anspruch 14, **dadurch gekennzeichnet, dass** die zweite Unterdruck-Ablasseinrichtung (103) ringförmig ist.

17. Hydraulisches System, das eine Filtervorrichtung (1) gemäß einem der Ansprüche 1 bis 16 enthält.

## Revendications

1. Dispositif de filtre (1) destiné à filtrer un fluide hydraulique, comprenant un boîtier de filtre (2) destiné à recevoir un élément de filtre (3), lequel boîtier de filtre (2) comprend une entrée (9), une sortie (10), une paroi intérieure annulaire (11) et des parois d'extrémité (5, 12), une paroi d'extrémité (12) comprend ladite entrée et/ou sortie, et
un détendeur de surpression (4) et une seconde sortie (13) destinés à réduire la pression dans le boîtier de filtre (2) en cas de surpression, **caractérisé en ce que** :
le détendeur de surpression (4) est agencé dans l'autre paroi d'extrémité (5), laquelle paroi d'extrémité (5) comprend la seconde sortie (13), et
le détendeur de surpression (4) comprend une soupape discoïde (14) dont la circonférence extérieure correspond sensiblement au diamètre interne de la paroi intérieure (11).

2. Dispositif de filtre selon la revendication 1, **caractérisé en ce que** le dispositif de filtre (1) comprend un second détendeur de surpression (6) destiné à réduire la pression dans un élément de filtre reçu (3) en cas de surpression.

3. Dispositif de filtre selon une des revendications précédentes, **caractérisé en ce que** le dispositif de filtre (1) comprend un détendeur de sous-pression (7) destiné à réduire la pression dans un élément de filtre reçu (3) en cas de sous-pression.

4. Dispositif de filtre selon une des revendications précédentes, **caractérisé en ce que** le détendeur de sous-pression (7) et le second détendeur de surpression (6) sont agencés dans ladite autre paroi d'extrémité (5).

5. Dispositif de filtre selon la revendication 1, **caractérisé en ce que** le dispositif de filtre (1) comprend :
- un second détendeur de surpression (6) destiné à réduire la pression dans un élément de filtre reçu (3) en cas de surpression et/ou
- un détendeur de sous-pression (7) destiné à réduire la pression dans un élément de filtre reçu (3) en cas de sous-pression, dans lequel
- le détendeur de sous-pression (7) et/ou le second détendeur de surpression (6) sont agencés dans ladite autre paroi d'extrémité (5) et
- le détendeur de surpression (4) comprend un passage de fluide (100) qui est positionné sensiblement au centre du détendeur de surpression (4).

6. Dispositif de filtre selon la revendication 5, **caractérisé en ce que** le passage de fluide (100) est une ouverture de détendeur (104) dans une soupape discoïde (14), laquelle ouverture de détendeur (104) est positionnée sensiblement au centre de la soupape discoïde (14).

7. Dispositif de filtre selon une des revendications 5 et 6, **caractérisé en ce que** ladite autre paroi d'extrémité (5) comprend des moyens d'entrée en prise (101) qui, durant l'utilisation, entrent en prise avec des moyens d'entrée en prise complémentaires d'un élément de filtre (3) et des canaux de fluide (25) pour le passage de fluide vers le passage de fluide (100).

8. Dispositif de filtre selon la revendication 2 ou 3, **caractérisé en ce que**, dans le boîtier de filtre (2), un élément de filtre (3) est reçu, lequel élément de filtre (3) comprend une sous-surface (8), et le détendeur de sous-pression (7) et le second détendeur de surpression (6) sont positionnés dans ladite sous-surface (8).

9. Dispositif de filtre selon la revendication 8, **caractérisé en ce que** le détendeur de sous-pression (7) et le second détendeur de surpression (6) sont raccordés à la sous-surface (8) de façon libérable.

10. Dispositif de filtre selon les revendications 5 ou 6, **caractérisé en ce que**:
- dans le boîtier de filtre (2), un élément de filtre (3) est reçu, lequel élément de filtre (3) comprend une sous-surface (8),
- le détendeur de sous-pression (7) et/ou le second détendeur de surpression (6) sont positionnés dans ladite sous-surface (8) et
- le détendeur de sous-pression (7) et/ou le second détendeur de surpression (6) sont en communication fluide avec le passage de fluide (100) de détendeur de surpression (4).

11. Dispositif de filtre selon la revendication 10, **caractérisé en ce que** :
- l'élément de filtre (3) comprend des moyens d'entrée en prise complémentaires (102) qui sont positionnés dans ladite sous-surface (8) et comprennent des canaux de fluide (25),
- les moyens d'entrée en prise complémentaires (102) de l'élément de filtre (3) sont en prise avec les moyens d'entrée en prise (101) du dispositif de filtre (1) de manière telle que le détendeur de sous-pression (7) et le second détendeur de surpression (6) sont en communication fluide avec le passage de fluide (100) par l'intermédiaire des canaux de fluide (25).

12. Dispositif de filtre selon la revendication 7, **caractérisé en ce que**:
- dans le boîtier de filtre (2), un élément de filtre (3) est reçu, lequel élément de filtre (3) comprend une sous-surface (8) et des moyens d'entrée en prise complémentaires (102),
- les moyens d'entrée en prise complémentaires (102) et le détendeur de sous-pression (7) et/ou le second détendeur de surpression (6) sont positionnés dans ladite sous-surface (8) et
- les moyens d'entrée en prise complémentaires (102) de l'élément de filtre (3) sont en prise avec les moyens d'entrée en prise (101) du dispositif de filtre (1) de manière telle que le détendeur de sous-pression (7) et/ou le second détendeur de surpression (6) sont en communication fluide avec le passage de fluide (100) du détendeur de surpression (4) par l'intermédiaire des canaux de fluide (25).

13. Dispositif de filtre selon une des revendications précédentes 3 à 12, **caractérisé en ce que** le détendeur de surpression (4), dans une position fermée, ferme un courant de fluide hors du boîtier de filtre (2) et, dans une position ouverte, ouvre un courant de fluide hors du boîtier de filtre (2),
le second détendeur de surpression (6), dans une position fermée, ferme un courant de fluide hors de l'élément de filtre reçu ou destiné à être reçu (3) et, dans une position ouverte, ouvre un courant de fluide hors de l'élément de filtre (3), et
le détendeur de sous-pression (7), dans une position fermée, ferme un courant de fluide dans l'élément de filtre (3) et, dans une position ouverte, ouvre un courant de fluide dans l'élément de filtre (3).

14. Dispositif de filtre selon une des revendications précédentes, **caractérisé en ce que** :
- dans le boîtier de filtre (2), un élément de filtre (3) est reçu, lequel élément de filtre (3) comprend une paroi annulaire (17),
- ladite autre paroi d'extrémité (5) comprend un second détendeur de sous-pression (103) destiné à réduire une sous-pression dans le boîtier de filtre (2) en fournissant un courant de fluide de la seconde sortie (13) au boîtier de filtre (2) et entre la paroi annulaire (17) de l'élément de filtre (3) et la paroi annulaire (11) du dispositif de filtre (1).

15. Dispositif de filtre selon la revendication 14, **caractérisé en ce que** le second détendeur de sous-pression (103) est positionné dans la soupape de surpression (4) et est construit pour se fermer à une surpression dans le boîtier de filtre (2) et pour s'ouvrir à une sous-pression dans le boîtier de filtre (2).

16. Dispositif de filtre selon la revendication 14, **caractérisé en ce que** le second détendeur de sous-pression (103) est annulaire.

17. Système hydraulique qui comprend un dispositif de filtre (1) selon une des revendications 1 à 16.
